# EUROPÄISCHE PATENTSCHRIFT

(11) **EP 0 486 831 B1**
(45) Veröffentlichungstag und Bekanntmachung des Hinweises auf die Patenterteilung: **30.03.1994**
(21) Anmeldenummer: 91118030.5
(22) Anmeldetag: 23.10.1991
(51) Int. Cl.: B23D 21/08

(54) **Trennwerkzeug für Metallröhrchen mit innenliegenden Lichtwellenleitern**
Cutting tool for metal tubes with internal optical fibres
Outil de coupe pour tuyaux en métal avec fibres optiques à l'interieur

(30) Priorität: 22.11.1990 DE 9015916 U
(43) Veröffentlichungstag der Anmeldung: 27.05.1992
(73) Patentinhaber: Felten & Guilleaume Energietechnik AG, D-51058 Köln (DE)
(72) Erfinder: Siegert, Wolfgang, W-5860 Iserlohn 7 (DE); Beck, Manfred, W-5000 Köln 90 (DE)

(56) Entgegenhaltungen:
- EP-A- 0 154 616
- GB-A- 1 038 515
- US-A- 3 011 371
- US-A- 3 624 682
- US-A- 3 672 050

## Beschreibung

Die Erfindung betrifft ein Trennwerkzeug für Metallröhrchen mit innenliegenden Lichtwellenleitern (LWL-Röhrchen) gemäß dem Oberbegriff des Anspruchs 1 (siehe US-A-3 011 371), das um das Röhrchen herumgeführt wird, wobei das Röhrchen auf einer Seite auf zwei Führungsrollen läuft und auf der gegenüberliegenden Seite von einer Schneidrolle durchgetrennt wird.

Aufbau und Wirkungsweise dieses Werkzeugs ähneln im Prinzip denen des bekannten Kabelschneiders für elektrische Kabel.

Nun ist es seit einigen Jahren bekannt, Lichtwellenleiter (LWL) in elektrische Freileiterseile dergestalt einzubauen, daß ein Bündel LWL lose in ein Röhrchen aus Edelstahl oder Kunststoff eingebracht wird, dessen Innendurchmesser groß gegen den LWL-Bündel-Außendurchmesser ist, und dieses LWL-Röhrchen anstelle eines Drahtes in eine der inneren Drahtlagen des Freileiterseils eingeseilt wird (EP-A2-0 286 804). Dabei hat das aus Edelstahl bestehende Röhrchen je nach den Seilerfordernissen einen Außendurchmesser zwischen 1 und 5 mm und eine diesbezügliche Wanddicke zwischen 0,15 und 0,4 mm.

Es ist ebenso bekannt, solche LWL-Röhrchen in Starkstromkabel, insbesondere in Kabel für Spannungen von 6 bis 60 kV, einzulegen (EP-A2-0 203 249), wozu die LWL-Röhrchen vorzugsweise in den Kabelschirm eingeseilt werden, sie jedoch auch in einen Energieleiter oder Aderzwickel eingeseilt werden können. In allen Fällen handelt es sich um ein relativ stabiles Röhrchen aus Edelstahl, das die empfindlichen LWL zu deren Schutz umgibt.

Nun ist es erforderlich, die LWL-Röhrchen an den Enden des Starkstromkabels oder des Freileiterseils aus diesen, und dann die LWL aus den Röhrchen herauszuführen, um die LWL-Anschlüsse herstellen zu können. Das letztere gilt auch für die bloßen LWL-Röhrchen, falls hier LWL-Anschlüsse herzustellen sind. Setzt man hierzu das Edelstahlröhrchen in der üblichen Weise mit einem Schneidmesser oder einer Schneidrolle ab, so wird das Röhrchenende scharfkantig ausgebildet, und es besteht die Gefahr, daß die herausgeführten, empfindlichen LWL beim weiteren Behandeln beschädigt werden.

In der US-A-3 011 071 wird ein Trennwerkzeug mit einer Schneidrolle für Röhrchen beschrieben, das zur Auflage des Röhrchens an einem Schenkel eines U-förmigen Halterungsteils Führungsrollen aufweist, zu denen die Schneidrolle achsparallel und im gleichen Abstand an dem anderen Schenkel angeordnet ist, wobei der Abstand der Schneidrolle zu den Führungsrollen veränderbar ist. Dazu ist die Schneidrolle an einem Gleitschlitten angeordnet, der mit einem Gewindezapfen in einer Gewindemuffe gelagert ist. Das Schneidwerkzeug nimmt das zu durchtrennende Röhrchen zwischen den Führungsrollen und der Schneidrolle, deren Position an den Röhrchendurchmesser anpaßbar ist, auf und wird um dieses Röhrchen zum Durchtrennen herumgeführt. Die Führungsrollen weisen jeweils eine U-förmige Nut zur Ausbildung einer Wulst am Röhrchen und eine kleinere V-förmige Nut zur Ausbildung einer abgeschrägten Schnittkante auf. Auf der der Rollenanordnung abgewandten Seite des Verbindungsteils der beiden Schenkel des Halterungsteils ist ein Werkzeug zur Beseitigung des Grates angeordnet, der beim Durchtrennen des Röhrchens an dessen Innenwandung entsteht. Der Gebrauch dieser Vorrichtung erfolgt unabhängig vom Gebrauch des Trennwerkzeuges und erfordert einen zweiten Arbeitsgang.

### Problem

Daher liegt der Erfindung das Problem zugrunde, ein Trennwerkzeug für Metallröhrchen mit innenliegenden Lichtwellenleitern (LWL-Röhrchen) zu schaffen, durch das die LWL-Röhrchen so abgesetzt werden können, daß durch diese eine Beschädigung der herausgeführten LWL beim weiteren Behandeln vermieden wird.

### Erfindung

Die Lösung dieses Problems besteht bei einem Trennwerkzeug der eingangs genannten Art erfindungsgemäß darin, daß neben der Schneidrolle im Abstand und auf gleicher Achse eine Sickrolle angeordnet ist und daß der von Schneidrolle und Sickrolle gebildete Trennrollensatz gegenüber den Führungsrollen mittels einer Meßschraube über deren Bolzen verstellbar ist. Der Abstand zwischen Schneidrolle und Sickrolle für einen derartigen Trennrollensatz ist, insbesondere in Abhängigkeit vom Durchmesser des zu trennenden Röhrchens, vorbestimmbar. Bei den üblicherweise zu trennenden LWL-Röhrchen mit einem Durchmesser zwischen 1 und 5 mm beträgt er etwa 1 mm, so daß das Röhrchen etwa 1 mm vor der Trennstelle rinnenartig eingedrückt wird.

In einer weiteren Ausführungsform der Erfindung ist die Schneidrolle in ihrem Querschnitt so ausgebildet, daß sie auf der Seite des abzutrennenden Rohrstücks konisch zuläuft und auf der der Sickrolle zugewandten Seite einen zylindrischen Ansatz mit einem gegenüber dem Schneidkantendurchmesser kleineren Durchmesser hat, wobei die Schneidkante auf der Seite des Ansatzes eine kleine Fase aufweist.

Einzelheiten der Erfindung sind in den Unteransprüchen angegeben, von denen Anspruch 2 das Gehäuse des Trennwerkzeuges, 3 den Trennrollensatz und 4 die Verbindung zwischen der Meßschraube und dem Trennrollensatz betrifft.

### Vorteile

Die Ausbildung des Trennwerkzeuges mit einer im Abstand zur Schneidrolle angeordneten Sickrolle, die das Röhrchen im Abstand zur Trennstelle mit einer Sicke versieht, hat den Vorteil, daß die freigelegten LWL im Abstand von der Trennkante gehalten werden. Darüber hinaus trägt die Fase an der Schneidkante in vorteilhafter Weise zur Vermeidung eines Grates an der Schnittfläche des Röhrchens bei.

### Darstellung der Erfindung.

Ein Ausführungsbeispiel der Erfindung ist in der Zeichnung dargestellt und wird im folgenden beschrieben. Es zeigen
- Fig. 1: ein erfindungsgemäßes Trennwerkzeug in Vorderansicht,
- Fig. 2: das Trennwerkzeug in Seitenansicht und
- Fig. 3: den Sollzustand des Röhrchenendes mit dem angesetzten Trennrollensatz.

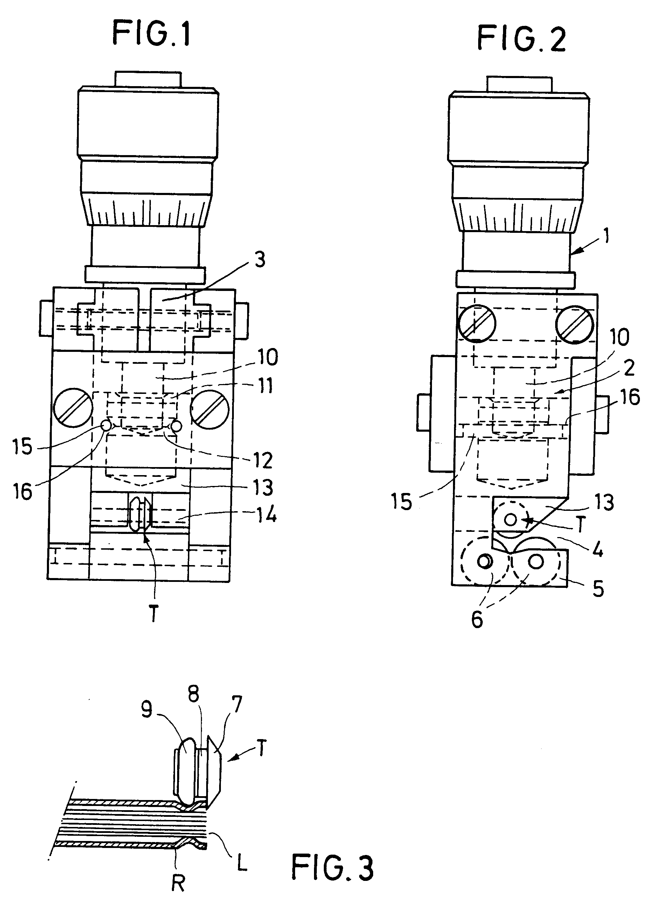

Aus den Fig. 1 und 2 ist ersichtlich, daß a) am Gehäuse einer üblichen Meßschraube 1 anstelle des Bügels ein mehrteiliges blockförmiges Werkzeuggehäuse 2 angeordnet ist, wozu in dieses Gehäuse die Schraub-Klemmplatte 3 geklemmt ist, b) das Werkzeuggehäuse am anderen, freien Ende eine seitliche gabelförmige Aussparung in einem U-förmigen Halterungsteil 4 zum Einschieben des LWL-Röhrchens R hat, c) in dem am Gehäuseende befindlichen, senkrecht zur Werkzeuglängsachse verlaufenden und als Gabelsteg ausgebildeten Schenkel 5 des Halterungsteils 4 die beiden Führungsrollen 6 gelagert sind, und d) gegenüber und achsparallel zu den Führungsrollen 6 der Trennrollensatz T angeordnet ist, dessen Abstand zu den Führungsrollen 6 mittels der Meßschraube 1 über deren Bolzen 10 veränderbar ist.

Aus der Fig. 3 ist ersichtlich, daß die Schneidrolle 7 in ihrem Querschnitt zum abzutrennenden Rohrstück hin konisch zuläuft und auf der der Sickrolle 9 zugewandten Seite einen zylindrischen Ansatz 8 aufweist, der einen gegenüber dem Schneidkantendurchmesser kleineren Durchmesser hat. Die Schneidkante weist über- dies auf der Seite des Ansatzes 8 eine kleine Fase auf (nicht dargestellt). Die Sickrolle 9 hat ein bogenförmiges, vorzugsweise kreisbogenförmiges Randprofil. Der Durchmesser der Schneidrolle 7 und der Sickrolle 9 beträgt 5 mm, die Dicke der Rollen 1,5 mm und die Dicke des Ansatzes 8 l mm.

Des weiteren geht aus den Fig. 1 und 2 hervor, daß im mittleren Teil des Werkzeuggehäuses 2 die Verbindung zwischen der Meßschraube 1 und dem Trennrollensatz T so ausgebildet ist, daß a) auf das Ende des Meßbolzens 10 die zylindrische Kappe 11 aufgepreßt ist, welche die Ringnut 12 hat, b) die Kappe von der blockförmigen Lagerbüchse 13 umfaßt wird, in deren Boden das Achslager 14 des Trennrollensatzes T angeordnet ist, und c) die Meßbolzenkappe 10 mit der Lagerbüchse 13 mittels der beiden Zylinderstäbe 15 verbunden ist, die bei der Kappe an zwei einander diametral gegenüberliegenden Stellen in die Ringnut 12 eingreifen, und bei der Büchse in den entsprechenden Wandlöchern 16 gehaltert sind.

Die Teile des Werkzeuggehäuses 2 bestehen aus Werkzeugstahl, mit Ausnahme der aus CuZnPb bestehenden Lagerbüchse 13. Schneidrolle 7 und Sickrolle 9 sind aus Stahl 125 Cr V3 und sind gehärtet.

Die Außenmaße des Trennwerkzeugs L x B x T betragen etwa 65 x 20 20 mm.

## Patentansprüche

1. Trennwerkzeug für Metallröhrchen (R) mit innenliegenden Lichtwellenleitern (L) (LWL-Röhrchen) mit zwei achsparallel an dem einen Schenkel eines U-förmigen Halterungsteils angeordneten Führungsrollen für das Metallröhrchen (R) und einer zu diesen achsparallel an dem gegenüberbefindlichen Schenkel angeordneten und im Abstand zu den Führungsrollen verstellbaren Schneidrolle, das um das LWL-Röhrchen herumgeführt wird, **dadurch gekenn****zeichnet,** daß neben der Schneidrolle **(7)** im Abstand eine Sickrolle **(9)** angeordnet ist, und daß der von der Schneidrolle **(7)** und Sickrolle **(9)** gebildete Trennrollensatz **(T)** gegenüber den Führungsrollen **(6)** mittels einer Meßschraube **(1)** über deren Bolzen verstellbar ist.

2. Trennwerkzeug nach Anspruch 1, **dadurch gekennzeichnet,**
- daß das U-förmige Halterungsteil **(4)** an dem freien Ende eines mehrteiligen, blockförmigen Werkzeuggehäuse **(2)** ausgebildet ist, das am anderen Ende am Gehäuse einer üblichen Meßschraube **(1)** anstelle des Bügels gehaltert ist, wozu in dieses Gehäuse eine Schraub-Klemmplatte **(3)** geschraubt ist,
- daß die Schenkel des Halterungsteils **(4)** senkrecht zur Werkzeugachse angeordnet und gabelförmig ausgebildet sind, und -
- daß die Führungsrollen **(6)** an dem der Meßschraube **(1)** abgewandten Schenkel **(5)** des Halterungsteils **(4)** und der Trennrollensatz **(T)** an dem der Meßschraube **(1)** zugewandten Schenkel des Halterungsteils **(4)** gelagert sind, wobei der den Trennrollensatz **(T)** tragende Schenkel mittels der Meßschraube **(1)** im Abstand gegenüber dem Schenkel **(5)** verstellbar ist.

3. Trennwerkzeug nach Anspruch 2, **dadurch gekennzeichnet,** daß die Schneidrolle **(7)** zum abzutrennenden Rohrstück hin konisch ausgebildet ist und auf der der Sickrolle **(9)** zugewandten Seite einen zylindrischen Ansatz **(8)** aufweist, dessen Durchmesser kleiner als der Schneidkantendurchmesser ist, und daß die Sickrolle **(9)** ein kreisbogenförmiges Randprofil und vorzugsweise einen dem Ansatz **(8)** entsprechenden Ansatz hat.

4. Trennwerkzeug nach Anspruch 2 oder 3, **dadurch gekennzeich****net,** daß im mittleren Teil des Werkzeuggehäuses **(2)** zur Verbindung zwischen der Meßschraube **(1)** und dem Trennrollensatz **(T)**
- auf das Ende des Meßbolzens **(10)** eine zylindrische Kappe **(11)** aufgepreßt ist, die eine Rignut **(12)** hat,
- die Kappe von einer blockförmigen Lagerbüchse **(13)** umfaßt wird, in deren Boden das Achslager **(14)** des Trennrollensatzes **(T)** angeordnet ist,
- und die Meßbolzenkappe **(11)** mit der Lagerbüchse **(13)** mittels zweier Zylinderstäbe **(15)** verbunden ist, die bei der Kappe an zwei einander diametral gegenüberliegenden Stellen in die Ringnut **(12)** eingreifen, und an der Lagerbüchse **(13)** in den entsprechenden Wandlöchern **(16)** gehaltert sind.

## Claims

1. A severing tool for metal tubes (R) with internal light wave guides (L) (LWG tubes), with two guide rollers for the metal tube (R) arranged axially parallel on one arm of a U-shaped mounting part, and a cutting roller arranged on the opposite arm axially parallel to the guide rollers and adjustable in its distance from the guide rollers, which severing tool is guided around the LWG tube, characterised in that a creasing roller (9) is arranged adjacent to the cutting roller (7) at a distance, and in that the set of severing rollers (T) formed by the cutting roller (7) and the creasing roller (9) is adjustable relative to the guide rollers (6) via the pin of a micrometer screw (1).

2. A severing tool according to Claim 1, characterised
- in that the U-shaped mounting part (4) is formed at the free end of a multiple-part block-like tool housing (2), which at its other end is fastened to the housing of a usual micrometer screw (1) instead of the bracket, for which purpose a screw clamping plate (3) is screwed into this housing,
- in that the arms of the mounting part (4) are arranged perpendicular to the tool axis and are formed in a forked manner, and -
- in that the guide rollers (6) are mounted on the arm (5) of the mounting part (4) furthest from the micrometer screw (1), and the set of severing rollers (T) is mounted on the arm of the mounting part (4) nearest the micrometer screw (1), the arm carrying the set of severing rollers (T) being adjustable in its distance relative to the arm (5) by means of the micrometer screw (1).

3. A severing tool according to Claim 2, characterised in that the cutting roller (7) is formed in a conical manner towards the tube piece to be severed and has a cylindrical projection (8) on the side facing the creasing roller (9), the diameter of which projection (8) is smaller than the diameter of the cutting edge, and in that the creasing roller (9) has a circular edge profile and preferably has a projection corresponding to the projection (8).

4. A severing tool according to Claim 2 or 3, characterised in that the micrometer screw (1) and the set of severing rollers (T) are connected in the central part of the tool housing (2) in such a manner that:
- a cylindrical cap (11) with an annular groove (12) is pressed onto the end of the measuring pin (10),
- the cap is enclosed by a block-like bearing bushing (13), in whose base the axle bearing (14) of the set of severing rollers (T) is arranged,
- and the measuring pin cap (11) is connected to the bearing bushing (13) by means of two cylindrical rods (15), which engage in the annular groove (12) in the cap at two diametrically opposite points, and are mounted on the bearing bushing (13) in the corresponding wall holes (16).

## Revendications

1. Outil de coupe pour des petits tubes métalliques (R) contenant des fibres optiques (L) avec deux galets de guidage du tube métallique (R), galets d'axes parallèles portés par une branche d'une pièce de fixation en forme de U et d'un galet de coupe d'axe parallèle à l'axe des autres galets, sur la branche opposée, et de distance réglable par rapport au galet de guidage, cet outil tournant autour du petit tube à fibres optiques, outil caractérisé en ce qu'à côté du galet de coupe (7), à une certaine distance, il y a un galet (9) pour former une gorge et l'élément à galet de coupe (T) formé par le galet de coupe (7) et le galet (9) pour la gorge, est réglable par rapport au galet de guidage (6) par l'intermédiaire d'une vis de réglage (7) de type Palmer et de son goujon.

2. Outil de coupe selon la revendication 1, caractérisé en ce que :
- la pièce de fixation (4) en forme de U comporte à une extrémité libre un boîtier d'outil (2) en forme de bloc en plusieurs parties qui comporte à l'autre extrémité du boîtier une vis de réglage de type Palmer (1), usuelle à la place de l'étrier, une plaque de serrage à vis (3) étant logée dans le boîtier,
- les branches de la pièce de fixation (4) étant en forme de fourche, disposées perpendiculairement à l'axe de l'outil et
- les galets de guidage (6) sont montés sur la branche (5) de la pièce de fixation (4), opposée à la vis de réglage de type Palmer (1) et l'élément à galet de coupe (T) est monté sur la branche de la pièce de fixation (4) tournée vers la vis de réglage de type Palmer (1), la branche portant l'élément à galet de coupe (T) étant réglable en distance par rapport à la banche (5), à l'aide de la vis de réglage de type Palmer (1).

3. Outil de coupe selon la revendication 2, caractérisé en ce que le galet de coupe (7) est de forme conique tournée vers le morceau de tube à couper et du côté tourné vers le galet à gorge (9), il comporte un prolongement cylindrique (8) dont le diamètre est inférieur au diamètre de l'arête de coupe et le galet à gorge (9) présente un profil en arc de cercle et un prolongement correspondant de préférence au prolongement (8).

4. Outil de coupe selon la revendication 2 ou 3, caractérisé en ce que dans la partie centrale du boîtier (2) de l'outil, pour la liaison entre la vis de mesure de type Palmer (1) et l'élément à galet de coupe (T),
- un capuchon cylindrique (11) est pressé sur l'extrémité du goujon de mesure (10), ce capuchon ayant une rainure annulaire (12),
- le capuchon étant entouré par une douille de palier (13) en forme de bloc dont le fond reçoit le palier d'axe (14) de l'élément à galet de coupe (T),
- et le capuchon (11) du goujon de mesure est relié à la douille de palier (13) à l'aide de deux tiges cylindriques (15) qui viennent prendre dans la rainure annulaire (12) en deux points diamétralement opposés du capuchon en étant maintenues dans des perçages correspondants (16) de la paroi de la douille de palier (13).
